# EUROPÄISCHE PATENTSCHRIFT

(11) **EP 0 737 541 B1**
(45) Veröffentlichungstag und Bekanntmachung des Hinweises auf die Patenterteilung: **04.08.1999**
(21) Anmeldenummer: 96105601.7
(22) Anmeldetag: 10.04.1996
(51) Int. Cl.: B23Q 3/155

(54) **Datenträger**
Data carrier
Support d'information

(30) Priorität: 11.04.1995 DE 29505853 U
(43) Veröffentlichungstag der Anmeldung: 16.10.1996
(73) Patentinhaber: Wolni, Günter, 35398 Giessen (DE)
(72) Erfinder: Weigel,Richard, D-35633 Lanau 1 (DE)
(74) Vertreter: Bauer, Dirk, Dipl.-Ing. Dipl.-Kfm.

(56) Entgegenhaltungen:
- EP-A- 0 115 055
- DE-B- 1 221 880
- JP-A- 1 034 629
- PATENT ABSTRACTS OF JAPAN vol. 007, no. 203 (M-241), 8.September 1983 & JP-A-58 102650 (TOYOTA JIDOSHA KOGYO KK), 18.Juni 1983,

## Beschreibung

Die Erfindung betrifft einen Datenträger zur Beschriftung eines Werkzeugträgers mit spezifischen Daten eines Werkzeuges, wobei der Datenträger elastisch ausgebildet und an den Werkzeugträger formschlüssig befestigbar ist.

Insbesondere bei vollautomatischen Werkzeugmaschinen werden die zur Werkstückbearbeitung erforderlichen Werkzeuge nicht mehr von Hand ausgewechselt, sondern die Werkzeugmaschine sucht sich die jeweils erforderlichen Werkzeuge programmgesteuert aus einem vorrätig gehaltenen Werkzeugsatz aus, überführt sie aus einem zugehörigen Magazin in ihre Werkzeugaufnahme und nach Gebrauch wieder in das Magazin zurück. Zu diesem Zweck besteht ein solches Magazin aus einer entsprechenden Anzahl gleicher, auf die betreffende Werkzeugmaschine abgestimmter Werkzeugträger, die mit jeweils einem für die Bearbeitung der Werkstücke geeigneten Werkzeug versehen sind. Die Werkzeugträger sind weitgehend einheitlich ausgeführt, selbstverständlich vor allem deren zur Beförderung in die und aus der Werkzeugmaschine bestimmte Bauelemente; in der Regel ist ein rotationssymmetrischer Aufnahmekonus an einem axial anschließenden Bolzenstück vorgesehen, das einen mit einer keilrillenförmigen, radialen, eventuell nur zum Teil für den Transport benötigten Haltenut versehenen, durch zwei diametral gegenüberliegende axiale Längsnuten unterbrochenen Haltebund aufweist; diese Kontur dient der Werkzeugmaschine zum Ergreifen und nachfolgenden Befördern des Werkzeugträgers.

Grundsätzlich ist für jedes Werkzeug ein eigener Werkzeugträger vorgesehen, mit dem zusammen das Werkzeug aus dem Magazin in ein Vorratslager überführt wird, wenn es nicht mehr gebraucht wird. Dabei muß sichergestellt werden, daß die oftmals sehr genau bemessenen Werkzeuge bei erneuter Überführung in das Magazin nicht verwechselt werden können. Zu diesem Zweck werden entweder die zugehörigen Werkzeugträger direkt mittels eines an ihnen angebrachten Datenträgers beschriftet, beispielsweise mit einer Schlüsselzahl auf einem Aufkleber, oder der Aufbewahrungsort im Lager wird werkzeugspezifisch in einer Liste festgehalten. In beiden Fällen ist die Lagerhaltung der Werkzeugträger mit ihren Werkstücken nicht befriedigend. So können beispielsweise Beschriftungen verlorengehen, wenn sich die zugehörigen Aufkleber oder dergleichen Datenträger von dem Werkzeugträger lösen und abhanden kommen. Die Registrierung in Listen ist besonders umständlich, weil die betreffenden Werkzeuge aus diesen Listen mühsam und zeitaufwendig herausgesucht werden müssen und auch Verwechslungen bei den Standorten der Werkzeugträger nicht auszuschließen sind.

Aus der JP-A-1034629 ist ein Datenträger der eingangs beschriebenen Art bekannt, der aus einem verformbaren Label besteht. Durch die Verformbarkeit des Labels läßt sich der daraus gebildete Datenträger zwar formschlüssig mit dem Werkzeugträger verbinden, jedoch ist diese Verbindung entweder derart, daß sie praktisch nicht mit vertretbarem Aufwand zu lösen und der Datenträger folglich nicht leicht auswechselbar ist oder aber derart, daß ein Lösen leicht unbeabsichtigt erfolgen kann und der Datenträger daraufhin verlorengeht oder nicht ohne weiteres erneut dem zugehörigen Werkzeugträger zugeordnet werden kann.

Die Erfindung hat sich die Aufgabe gestellt, einen Datenträger der eingangs bezeichneten Art anzugeben, der in einfacher Weise vom Werkzeugträger lösbar ist, jedoch sicher mit diesem verbunden bleibt, solange eine Trennung nicht beabsichtigt ist.

Erfindungsgemäß wird die Aufgabe dadurch gelöst, daß der Datenträger aus einem schalenförmigen Segment eines Rohrstückes besteht, das an einem Haltebund des Werkzeugträgers durch seine Eigenelastizität auswechselbar befestigbar ist.

In einer besonders bevorzugten Ausführung ist dabei der Datenträger mit Halteelementen versehen, die in einer jeweils zugehörigen Halteausnehmung an dem Werkzeugträger oder an dessen Kontur zur Herstellung einer formschlüssigen Halterung einführbar bzw. klemmbar sind. Ein solcher Datenträger hängt nicht mehr von den Unwägbarkeiten ab, die eine stoffschlüssige Anbindung an den Werkzeugträger mit sich bringt. Er benötigt überhaupt keine Verbindungselemente, sondern nutzt die für die Förderung des Werkzeugträgers in das und aus dem Magazin ohnehin vorhandenen konstruktiven Elemente des Werkzeugträgers auch für dessen Beschriftung.

Die Anordnung kann dabei so eingerichtet werden, daß das Segment nach der Herstellung der Halterung auf der Oberfläche eines durch die Halteausnehmungen unterbrochenen rotationssymmetrischen Haltebundes des Werkzeugträgers aufliegt.

Besonders vorteilhaft ist es, wenn der Datenträger in seinem Hauptbestandteil als schalenförmiges, vorzugsweise halbschalenförmiges Segment eines Rohrstückes ausgebildet ist, das auf seiner äußeren Mantelfläche mit den Daten des zugehörigen Werkzeuges, die auch nach Herstellung der Halterung lesbar sind, beschriftet ist. Eine solche Anordnung ist einerseits außerordentlich stabil, so daß der Zusammenhang zwischen dem Werkzeugträger und dem zugehörigen Werkzeug stets erhalten bleibt und das Werkzeug identifiziert werden kann, andererseits kann der Datenträger aber auch schnell wieder gelöst werden, so daß ein zügiger Wechsel gewährleistet werden kann, sowohl gegen neue Werkzeuge als auch dann, wenn der Datenträger zeitweilig von dem Werkzeugträger entfernt werden soll.

Die (möglichst dauerhafte) Elastizität des Datenträger kann bereits ausreichen, um diesen auch achsstabil zu orientieren durch einen entsprechenden, kräftigen Reibschluß; es kann aber auch zweckmäßig sein, daß das Segment an seiner inneren Mantelfläche ein Ringbundsegment aufweist, das bei der Herstellung der Halterung in eine an dem Haltebund befindliche, rillenförmig umlaufende Haltenut gerät, den Datenträger an dem Werkzeugträger axial arretierend, so daß auch in dieser Richtung ein Formschluß vorhanden ist, wenn sich der Datenträger auf dem Werkzeugträger befindet. Dabei können das Ringbundsegment und die Haltenut keilförmig profiliert sein. Besonders in den Fällen, in denen an dem Werkzeugträger eine Haltenut nicht vorhanden ist, kann vorteilhaft mindestens ein weiteres Ringbundsegment vorgesehen sein, das an einer Stirnseite des Haltebundes anliegt, demzufolge auch in diesem Fall den Datenträger axial arretierend.

Die Befestigung des Datenträgers an dem Werkzeugträger erfolgt in einfacher Weise beispielsweise dadurch, daß er einstückig an seinen das Segment abschließenden radialen Stirnenden radial nach innen weisende Laschen besitzt, die als Halteelemente jeweils in einer vorzugsweise achsparallelen, der Halterung dienenden, beispielsweise nutförmigen Halteausnehmung an dem Werkzeugträger rastbar sind. Es ist aber auch in einer besonders bevorzugten Ausführung möglich, daß der Datenträger einstückig an seinen das Segment abschließenden radialen Stirnenden Haltesegmente besitzt, welche, die Form des Segmentes zumindest teilweise über die Halbschale hinaus fortsetzend, dem Umfang des Werkzeugträgers folgen. In jedem Fall genügt ein kurzer Handgriff, um den Datenträger an dem Werkzeugträger festzuklemmen; Verbindungselemente sind nicht erforderlich.

Insgesamt bietet der erfindungsgemäße Datenträger viel Komfort bei der Verwaltung selbst ausgedehnter Lager von Werkzeugen; Verluste und umfangreiche Nachmessungen von Werkzeugen entfallen.

Die Erfindung wird nachstehend an Hand der Zeichnung an einem Ausführungsbeispiel näher erläutert. Es zeigen
- Fig.1: einen Werkzeugträger mit einem daran , erfindungsgemäßen Datenträger in der Vorderansicht,
- Fig.2: einen Schnitt A - A aus Fig.1,
- Fig.3 bis Fig.5: den Datenträger in Vorder-, Drauf- und mittig geschnittener Seitenansicht,
- Fig.6 bis Fig. 10: eine geringfügig geänderte Ausführung des Ausführungsbeispiels der Fig.1 bis 5 und
- Fig.11 bis Fig. 15: eine gegenüber den vorigen nochmals veränderte Ausführung,
sämtlich in vereinfachter, schematischer Darstellung.

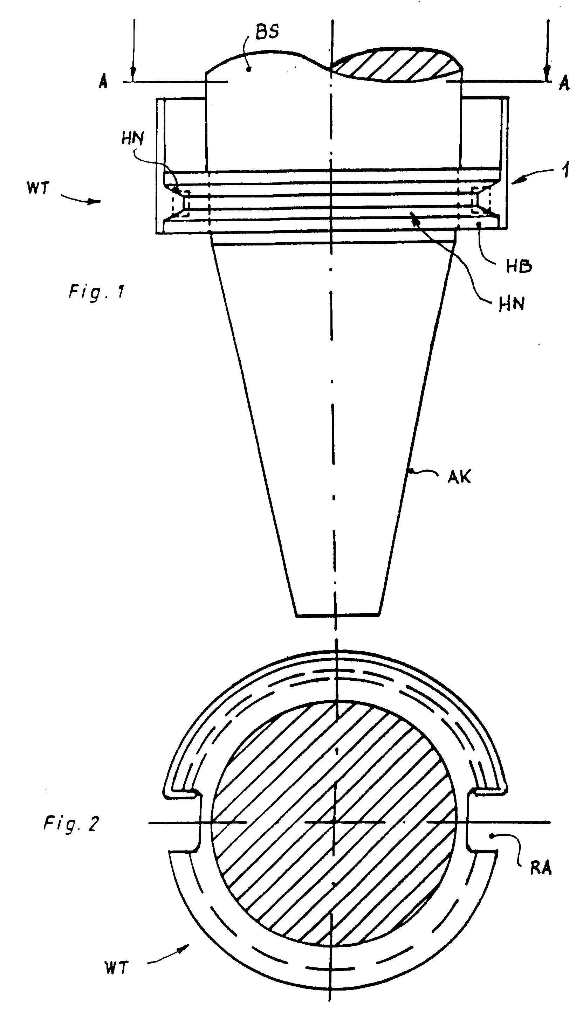

Ein in der Zeichnung weggelassenes Werkzeug wird von einem Werkzeugträger WT aufgenommen, der entsprechend Fig.1 und 2 aus einem Aufnahmekonus AK und einem Bolzenstück BS zusammengesetzt ist. An dem Bolzenstück BS befindet sich einstückig ein kreisringförmiger Haltebund HB, in dem eine keilförmige, umlaufende Haltenut HN eingetieft ist, so daß sich ungefähr das Profil einer einrilligen Keilriemenscheibe einstellt. In der Fig.2 sind nutförmige, achsparallele, durch den gesamten Haltebund HB geführte Halteausnehmungen RA zu erkennen, die in der Regel ebenfalls an einem derartigen Werkzeugträger WT bereits ausgebildet sind. Eine derartige, zum Stand der Technik gehörige Anordnung dient insgesamt dazu, daß ein in einem zweckentsprechenden Magazin vorrätig gehaltener Werkzeugträger WT von einer Werkzeugmaschine zielgerichtet abgefördert werden kann und dabei das zugehörige Werkzeug für den Arbeitsprozeß aktiviert wird.

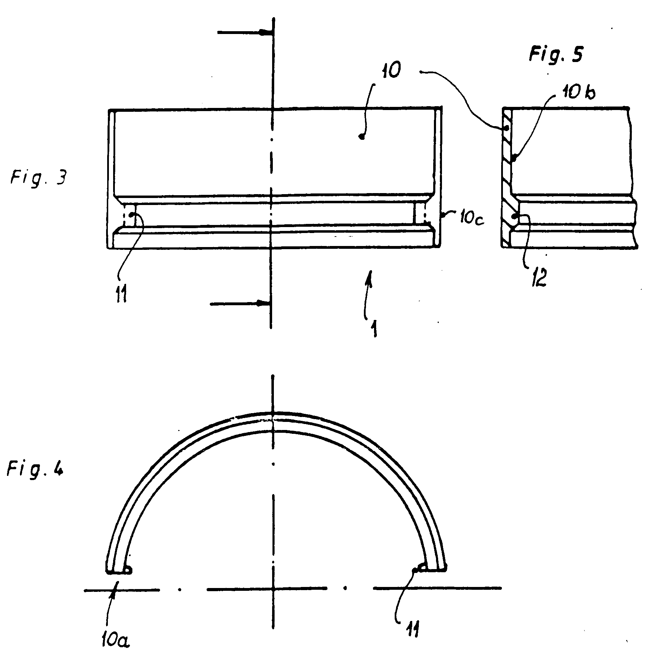

Ein Datenträger 1, dessen Konfiguration im einzelnen in den Fig.3 bis 5 zu erkennen ist, ist aus einem Segment 10 eines kreiszylindrischen Rohres, zwei an den radialen Stirnenden 10a angesetzten und radial nach innen abgebogenen Laschen 11 und (Fig.5) einem ersten Ringbundsegment 12 zusammengesetzt, das an der inneren Mantelfläche 10b des Segmentes 10 mit diesem einstückig vorgesehen ist in der Weise, daß es sich (Fig.1) in der Haltenut HN befindet, wenn der Dateiträger 1 montiert ist. Das Ringbundsegment 12 ist achsparallel so bemessen, daß der Datenträger 1 in dieser Richtung arretiert ist. Zusammen mit den Laschen 11 ist er damit örtlich eindeutig und formschlüssig festgelegt.

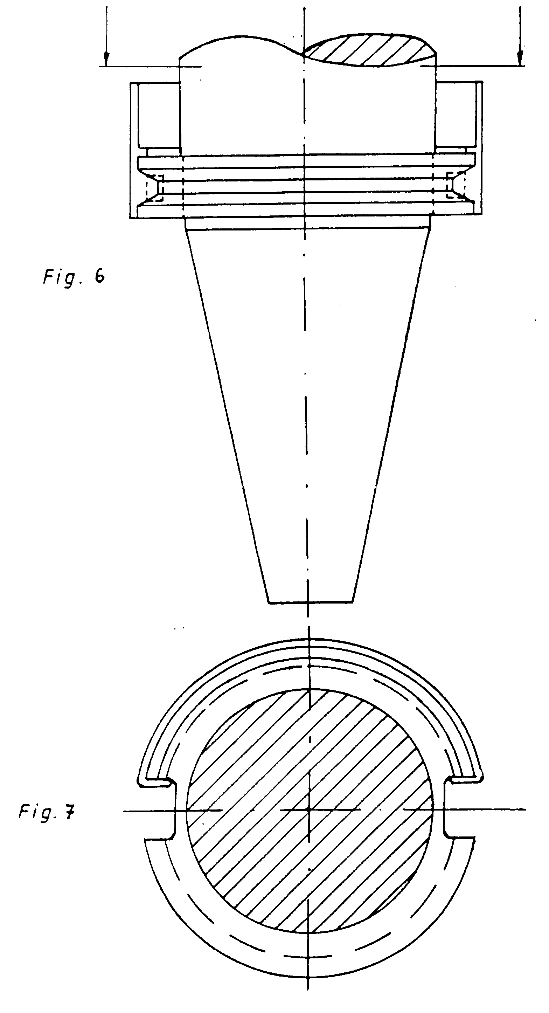

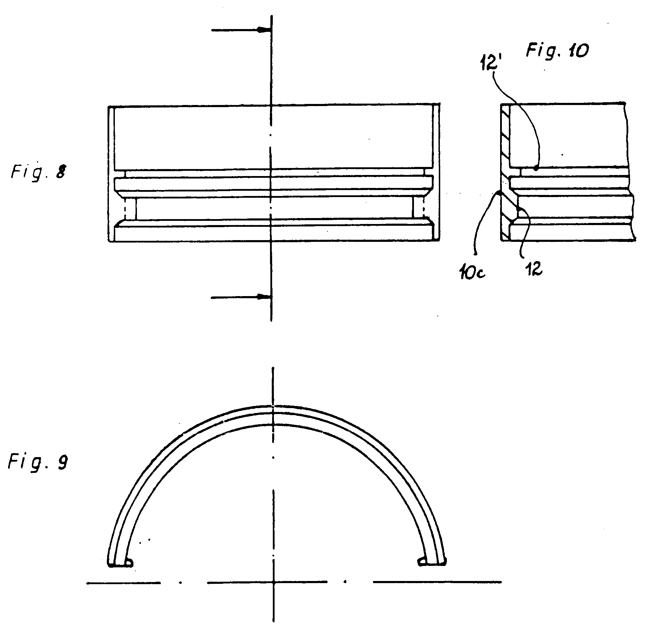

Die Ausführung der Fig.6 bis 10 unterscheidet sich von derjenigen der Fig.1 bis 5 lediglich dadurch, daß ein zweites Ringbundsegment 12' an der inneren Mantelfläche 10b angeformt ist, beispielsweise zur Versteifung des Segmentes 10 dort, wo es nicht auf dem Umfang des Haltebundes HB aufliegt.

Die äußere Mantelfläche 10c steht gänzlich zur Beschriftung zur Verfügung, die beliebig und jedenfalls dauerhaft ausgeführt werden kann.

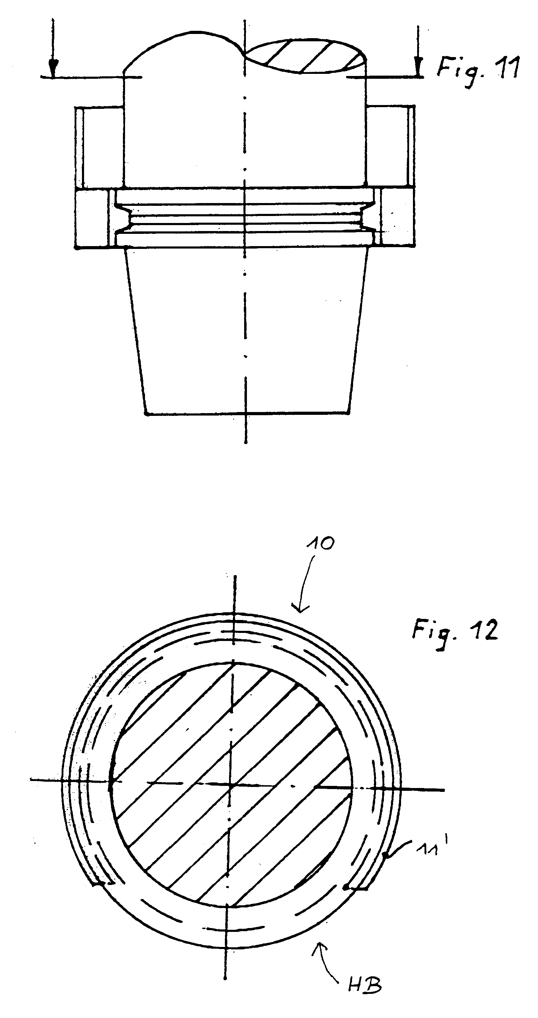

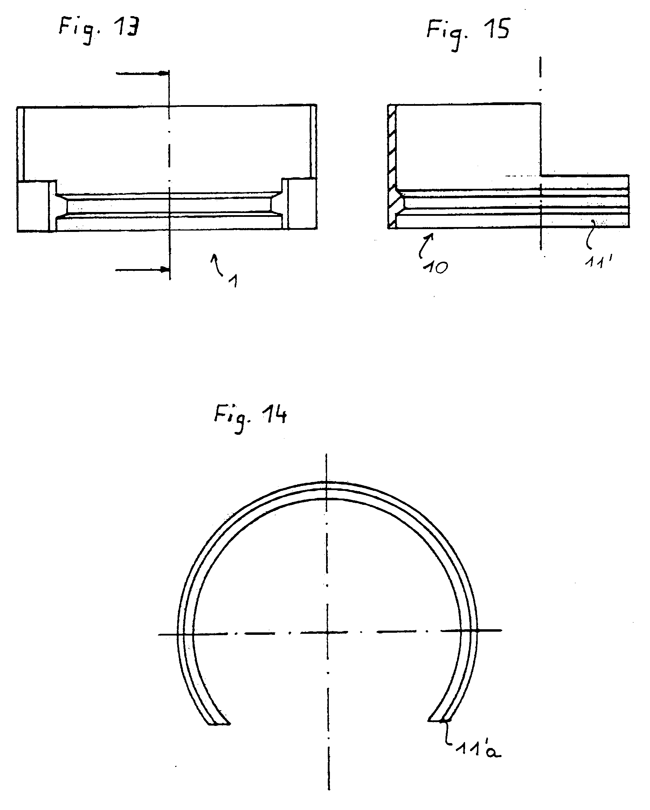

In der Ausführung der Fig.11 bis 15 ist auf die Laschen 11 als Halteelement verzichtet worden, und stattdessen sind Haltesegmente 11' vorgsehen, welche ebenfalls als Halteelemente dienen. Die halbschalenförmigen Segmente 10 sind zu diesem Zweck etwa in der gleichen Höhe wie der Haltebund HB soweit an ihrem Umfang verlängert, daß sich für das Segment 10 einschließlich der Haltesegmente 11' etwa das Segment eines Dreiviertelkreises ergibt. Die Stirnenden 11'a der Haltesegmente 11 sind dabei so gestaltet, daß sie, den Datenträger 1 dabei spreizend, leicht über den Umfang des Haltebundes HB gleiten können.

## Patentansprüche

1. Datenträger (1) zur Beschriftung eines Werkzeugträgers (WT) mit spezifischen Daten eines Werkzeuges, wobei der Datenträger (1) elastisch ausgebildet und an den Werkzeugträger (WT) formschlüssig befestigbar ist, dadurch gekennzeichnet, daß der Datenträger (1) aus einem schalenförmigen Segment eines Rohrstückes besteht, das an einem Haltebund (HB) des Werkzeugträgers (WT) durch seine Elastizität auswechselbar befestigtbar ist.

2. Datenträger nach Anspruch 1, dadurch gekennzeichnet, daß der Datenträger (1) mit Halteelementen (11) vergehen ist, die in einer jeweils zugehörigen Halteausnehmung (RA) an dem Werkzeugträger (WT) oder an dessen Kontur zur Herstellung einer formschlüssigen Halterung (RA,11) einführbar bzw. klemmbar sind.

3. Datenträger nach Anspruch 2, dadurch gekennzeichnet, daß der Datenträger (1) in seinem Hauptbestandteil als schalenförmiges, vorzugsweise halbschalenförmiges Segment (10) eines Rohrstückes ausgebildet ist, das auf seiner äußeren Mantelfläche (10c) mit den Daten des zugehörigen Werkzeuges, die auch nach der Herstellung der Halterung (RA,11) lesbar sind, beschriftet ist.

4. Datenträger nach Anspruch 3, dadurch gekennzeichnet, daß das Segment (10) nach der Herstellung der Halterung (RA,11) auf der Oberfläche eines durch die Halteausnehmungen (RA) unterbrochenen rotationssymmetrischen Haltebundes (HB) des Werkzeugträgers (WT) aufliegt.

5. Datenträger nach Anspruch 4, dadurch gekennzeichnet, daß das Segment (10) an seiner inneren Mantelfläche (10b) ein Ringbundsegment (12) aufweist, das bei der Herstellung der Halterung (RA,11) in eine an dem Haltebund (HB) befindliche, rillenförmig umlaufende Haltenut (HN) gerät, den Datenträger (1) an dem Werkzeugträger (WT) axial arretierend.

6. Datenträger nach Anspruch 5, dadurch gekennzeichnet, daß das Ringbundsegment (12) und die Haltenut (HN) keilförmig ausgebildet sind.

7. Datenträger nach Anspruch 5 oder 6, dadurch gekennzeichnet, daß mindestens ein weiteres Ringbundsegment (12') vorgesehen ist, das an einer Stirnseite des Haltebundes (HB) anliegt.

8. Datenträger nach einem der Ansprüche 3 bis 7, dadurch gekennzeichnet, daß er einstückig an seinen das Segment (10) abschließenden radialen Stirnenden (10a) radial nach innen weisende Laschen (11) besitzt, die als Halteelemente jeweils in einer vorzugsweise achsparallelen, der Halterung dienenden, beispielsweise nutförmigen Halteausnehmung (RA) an dem Werkzeugträger (WT) rastbar sind.

9. Datenträger nach einem der Ansprüche 3 bis 7, dadurch gekennzeichnet, daß er einstückig an seinen das Segment (10) abschließenden radialen Stirnenden (10a) Haltesegmente (11') besitzt, welche, die Form des Segmentes (10) zumindest teilweise über die Halbschale hinaus fortsetzend, dem Umfang des Werkzeugträgers (WT) folgen.

## Claims

1. Data carrier (1) for marking a tool carrier (WT) with specific data of a tool, and the date carrier (1) is of elastic design and positively mounted onto the tool carrier (WT), **characterised in that** the data carrier (1) is made of a cuplike segment of a tubular piece which is by virtue of its elasticity exchangeably mounted on a holding collar (HB) of the tool carrier (WT).

2. Data carrier according to Claim 1, **characterised in that** the data carrier (1) is provided with holding elements (11) which are insertible into a respective associated holding recess (RA) on the tool carrier (WT) or clamped onto its contour for the purpose of establishing a positive support (RA,11).

3. Data carrier according to Claim 2, **characterised in that** the data carrier (1) is in its main component a cupshaped, preferably semispherical segment (10) of a tubular piece which is on its outer casing surface (10c) marked with data of an associated tool which are still legible after establishing the support (RA,11).

4. Data carrier according to Claim 3, **characterised in that** after having established the support (RA,11), the segment (10) lies on the surface of a rotary-symmetrical support collar (HB) of the tool carrier (WT) which is interrupted by holding recesses (RA).

5. Data carrier according to Claim 4, **characterised in that** the segment (10) comprises on its inner casing surface (10b) an annular collar segment (12) which, whilst establishing the support (RA,11), enters into a groovelike peripheral holding groove (HN) located at the support collar (HB) and axially arrests the data carrier (1) on the tool carrier (WT).

6. Data carrier according to Claim 5, **characterised in that** the annular collar segment (12) and the holding groove (HN) are of wedgeshaped design.

7. Data carrier according to Claim 5 or 6, **characterised in that** at least one additional annular collar segment (12') is provided which abuts against one end of the support collar (HB).

8. Data carrier according to one of Claims 3 to 7, **characterised in that** it is at its radial ends (10a) which seal the segment (10) integrally provided with radially inward oriented tongues (11) which are respectively detentable as holding elements in a holding recess (RA) on the tool carrier (WT), which is preferably axis-parallel and serves as a holder and is, for example, grooveshaped.

9. Data carrier according to one of Claims 3 to 7, **characterised in that** it is at its radial ends (10a) which seal the segment (10) integrally provided with holding segments (11') which, whilst at least partially maintaining the shape of segment (10) beyond the semisphere, follow the circumference of the tool carrier (WT).

## Revendications

1. Support d'information (1) permettant l'inscription sur un porte-outil (WT) de données spécifiques à un outil, le support d'information (1) étant conçu pour être élastique et pouvant se fixer au porte-outil (WT) par complémentarité de forme, caractérisé en ce que le support d'information (1) consiste en un segment de tube en forme de cuvette qui peut, du fait de son élasticité, être fixé à un collet de retenue (HB) du porte-outil (WT) de telle sort qu'il puisse être échangé.

2. Support d'information selon la revendication 1, caractérisé en ce que le support d'information (1) est muni d'éléments d'arrêt (11) qui peuvent être introduits ou coincés dans les creux de maintien (RA) qui leur sont respectivement attribués sur le porte-outil (WT) ou son contour afin de constituer une fixation par complémentarité de forme (RA, 11).

3. Support d'information selon la revendication 2, caractérisé en ce que l'élément principal du support d'information (1) est un segment (10) de tube en forme de cuvette, de préférence de demi-cuvette, sur la face latérale extérieure (10c) duquel sont inscrites les données de l'outil correspondant, lesquelles peuvent être lues également après la fixation (RA, 11).

4. Support d'information selon la revendication 3, caractérisé en ce que, une fois la fixation (RA, 11) constituée, le segment (10) est appliqué sur la surface d'un collet de retenue (HB) du porte-outil (WT) à symétrie de révolution interrompue par les creux de maintien (RA).

5. Support d'information selon la revendication 4, caractérisé en ce que le segment (10) comporte sur sa face latérale intérieure (10b) un segment de collet annulaire (12), lequel, lors de la constitution de la fixation (RA, 11), entre dans une gorge de retenue (HN) faisant le tour du collet de retenue (HB) sous la forme d'une rainure, ce qui bloque le support d'information (1) sur le porte-outil (WT) dans la direction axiale.

6. Support d'information selon la revendication 5, caractérisé en ce que le segment de collet annulaire (12) et la gorge de retenue (HN) sont cunéiformes.

7. Support d'information selon la revendication 5 ou 6, caractérisé en ce qu'il est prévu au moins un autre segment de collet annulaire (12'), qui s'applique à une face avant du collet de retenue (HB).

8. Support d'information selon l'une des revendications de 3 à 7, caractérisé en ce qu'il possède, à ses extrémités frontales radiales (10a) terminant le segment (10), des pattes (11) d'un seul tenant orientées radialement vers l'intérieur, lesquelles, servant d'éléments d'arrêt, peuvent être encliquetées sur le porte-outil (WT) dans les creux de maintien (RA) respectifs qui servent à la fixation, qui sont de préférence parallèles à l'axe et qui sont en forme de gorge par exemple.

9. Support d'information selon l'une des revendications de 3 à 7, caractérisé en ce qu'il possède, à ses extrémités frontales radiales (10a) terminant le segment (10), des segments de retenue (11') d'un seul tenant, qui suivent le contour du porte-outil (WT) en continuant la forme du segment (10) au moins partiellement au-delà de la demi-cuvette.
